# EUROPÄISCHE PATENTANMELDUNG

(11) **EP 0 974 310 A2**
(43) Veröffentlichungstag der Anmeldung: **26.01.2000**
(21) Anmeldenummer: 98118354.4
(22) Anmeldetag: 28.09.1998
(51) Int. Cl.: A61C 5/10, A61C 13/00, A61C 13/003

(54) **Verfahren zur Herstellung von Kronen-und Brückengerüsten**

(30) Priorität: 08.05.1998 DE 19820763
(71) Anmelder: Noack, Martin, 75180 Pforzheim (DE); Sperber, Tim, 49324 Melle (DE)
(72) Erfinder: Noack, Martin, 75180 Pforzheim (DE); Sperber, Tim, 49324 Melle (DE)
(74) Vertreter: Fleck, Hermann-Josef, Dr.-Ing.

(57) **Zusammenfassung**

Die Erfindung bezieht sich auf Verfahren zur Herstellung von mit Polygläsern, Composit oder Ceromeren ummantelten Kronen-, Brückengerüsten oder Prothesenteilen. Eine einfache Herstellung bei stabilem Aufbau wird dadurch erzielt, daß zunächst ein Fasermaterial (3, 4) um ein Modell eines präparierten Zahnstumpfes (1, 2) herumgelegt, mit einem polymerisierbaren Kunststoff durchtränkt wird, anpolymerisiert und anschließend vollständig oder teilweise mit oben genannten Materialien ummantelt wird

## Beschreibung

Die Erfindung bezieht sich auf ein Verfahren zur Herstellung von mit Polygläsern, Composit oder Ceromeren ummantelten Kronen-, Brückengerüsten oder Prothesenteilen sowie auf nach diesem Verfahren hergestellte Kronen-, Brückengerüste oder Prothesenteile.

Bei der Herstellung von kunststoffverblendeten Kronen und Brücken war es bisher üblich, Metallgerüste, die im Gußverfahren hergestellt wurden, als Stabilisierungsunterlage und Träger des Kunststoffes, einzusetzen.

Der Erfindung liegt die Aufgabe zugrunde, ein Verfahren der eingangs genannten Art bereitzustellen, das Herstellungsvorteile bietet und mit beliebigem Dentalkunststoff, mit Polygläsern oder Ceromeren verblendet werden kann.

Diese Aufgabe wird mit den Merkmalen des Anspruchs 1 gelöst. Hiernach ist vorgesehen, daß zunächst ein Faserverbundmaterial um ein Modell eines präparierten Zahnstumpfes herumgelegt, mit einem polymerisierbaren Kunststoff durchtränkt wird, anpolymerisiert und anschließend vollständig oder teilweise mit oben genannten Materialien ummantelt wird. Mit diesen Maßnahmen wird der Herstellungsvorgang vereinfacht, wobei der bei dem herkömmlichen Verfahren zeitaufwendige und oftmals nicht befriedigende Gießvorgang zur Herstellung der Träger-Metallunterlage gänzlich entfällt. Bei dem vorliegenden Verfahren ist es vorteilhaft, zunächst eine dünne Schicht aus Kunststoff auf das Modell des präparierten Zahnstumpfes aufzuschichten. Um diese Schicht wird das Faserverbundmaterial in Form eines Faserbandes oder einer Fasermatte gelegt, anfiniert und anpolymerisiert. Hierauf wird nun das Verblendmaterial aufgeschichtet und in verfahrensüblicher Weise polymerisiert. Vorteilhafte Maßnahmen hinsichtlich der einfachen und stabilen Herstellung sowie vielfältiger Abstimmungsmöglichkeiten auf jeweilige Verhältnisse sind in den Unteransprüchen aufgeführt.

Bei der Herstellung von Brücken können freitragende Zwischenglieder nach dem in den Ansprüchen angegebenen Verfahren aus dem Faserverbundmaterial geformt werden. Dabei werden die Modellstümpfe mit dem Faserverbundmaterial bzw. der Faser umschlungen, diese im Interdentalbereich zusammengepreßt und ein Verbindungssteg aus der Faser geformt. Zur Verstärkung wird dieser Steg eng mit dem freien Ende der Faser oder mit einem zweiten Faserband umwickelt, so daß ein kompakter, stabiler Steg entsteht.

Dieses Faserverbundgerüst kann mit jedem handelsüblichen Verblendmaterial umschichtet werden. Es entsteht so eine sehr leichte, hochstabile und ästhetisch anspruchsvolle Brücke.

Die verwendete Faser kann sowohl als Glasfaser, als Carbonfaser, als Polyethylenfaser oder auch als jegliches anderes Faserverbundmaterial bzw. Fasermaterial vorliegen. Es können einfache longitudinale Fasern, spezielle Geflechte, Gewebe oder Fasergestricke zur Anwendung kommen.

Die Fasern können oberflächenbeschichtet sein, damit sie sich mit jedem dentalen Kunststoff verbinden, oder sie können mit einer speziellen Matrix beschichtet sein, um sich mit einem darauf abgestimmten Verblendmaterial besonders gut zu verbinden.

Der die Faser verfestigende Verbundwerkstoff kann ein kalt, heiß oder auch ein durch Lichteinwirkung polymerisierender Kunststoff sein. Außerdem kann die Faser bereits mit dem zu polymerisierenden Kunststoff vorgetränkt sein.

Die Verbringung der Faser auf den Modellstumpf kann auch maschinell erfolgen, z.B. mit bestimmten Tiefziehverfahren. Hierbei wird das Faserverbundmaterial im tiefgezogenen Zustand polymerisiert.

Bei dem vorliegenden Verfahren braucht die Faser nach der Polymerisation nicht bearbeitet zu werden. Das bedeutet, daß für den Techniker keine Gefährdung durch Feinstäube entsteht.

Die Faser sollte bei der fertiggestellten Krone oder Brücke vollständig mit dem Verblendmaterial ummantelt sein. Die Faser darf vor allem in den Interdentalräumen nicht angeschnitten werden, damit das Gerüst seine Stabilität behält.

Die Erfindung wird nachfolgend anhand eines Ausführungsbeispiels näher erläutert.

Die Fig. zeigt die Vorgehensweise beispielhaft bei der Herstellung einer Brücke. Faserverbundmaterial in Form eines Faserbandes oder einer Fasermatte 3 wird um zwei präparierte Zahnstümpfe eines Modells gelegt, die zwischen sich einen Interdentalraum begrenzen. Das Faserband 3 kann einfach oder mehrfach um die beiden Zahnstümpfe 1, 2 geschlungen sein, wie aus den Teilfiguren b) bis d) mit den daneben dargestellten schematischen Prinzipskizzen ersichtlich. Wie Teilfigur d) zeigt, wird das Faserband im Interdentalraum zusammengepreßt, um einen Verbindungssteg aus dem Faserband 3 zu formen. Um den Verbindungssteg wird anschließend zur Verstärkung ein weiteres Faserband 4 gewickelt, wie die Teilfiguren e) und f) zeigen.

Der so gebildete, kompakte Steg kann anschließend mit jedem handelsüblichen Verblendmaterial umschichtet werden, wie vorstehend beschrieben.

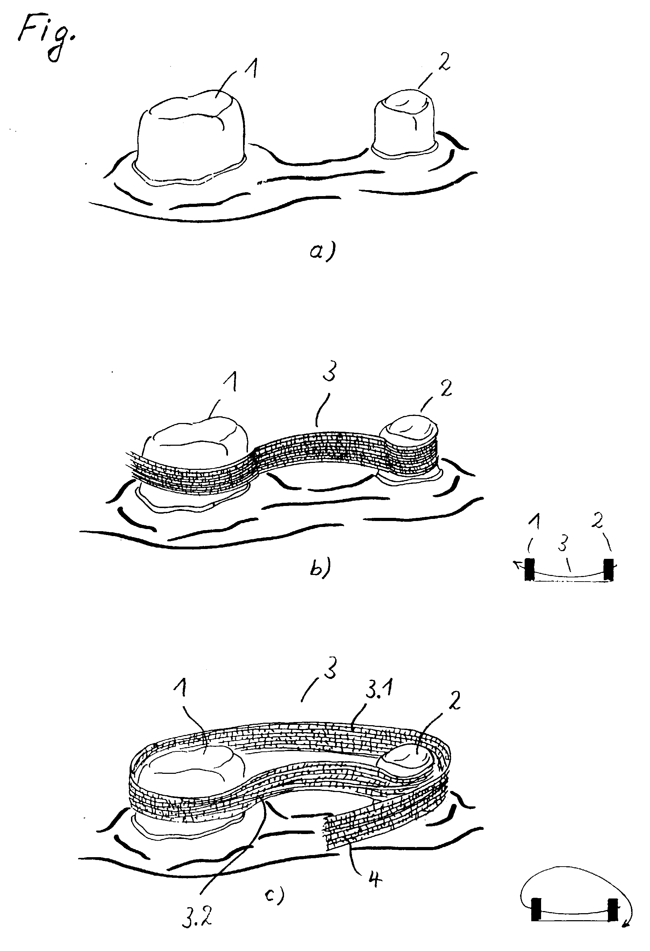

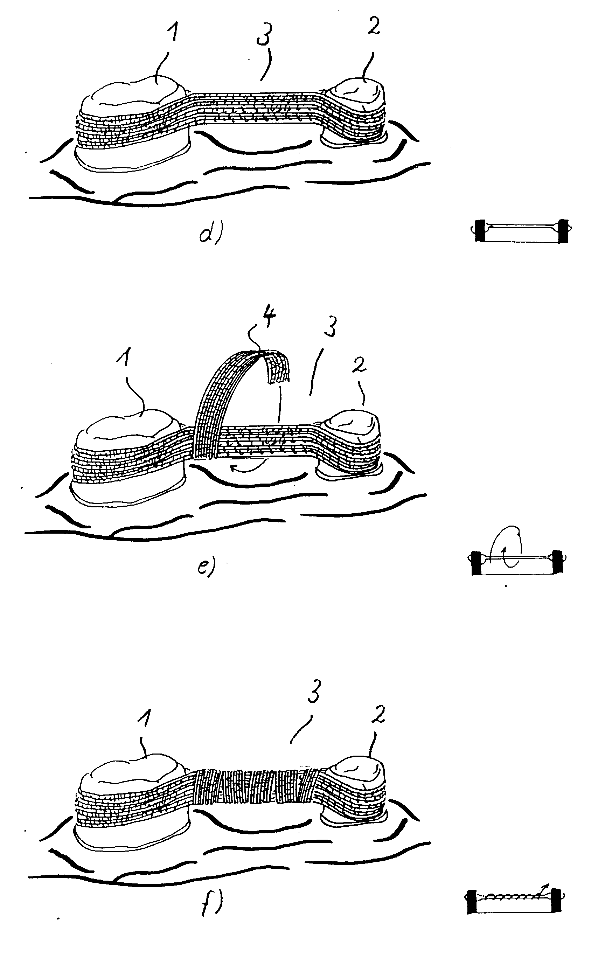

## Patentansprüche

1. Verfahren zur Herstellung von mit Polygläsern, Composit oder Ceromeren ummantelten Kronen-, Brückengerüsten oder Prothesenteilen,
dadurch gekennzeichnet,
daß zunächst ein Fasermaterial (3, 4) um ein Modell eines präparierten Zahnstumpfes (1, 2) herumgelegt, mit einem polymerisierbaren Kunststoff durchtränkt wird, anpolymerisiert und anschließend vollständig oder teilweise mit oben genannten Materialien ummantelt wird.

2. Verfahren nach Anspruch 1,
dadurch gekennzeichnet,
daß das Fasermaterial (3, 4) sowohl als longitudinale Faser, als spezielles Geflecht, als Gewebe oder Fasergestricke zur Anwendung kommt.

3. Verfahren nach Anspruch 1 oder 2,
dadurch gekennzeichnet,
daß das Fasermaterial (3, 4) eine Oberflächenbeschichtung aufweist, die sich mit handelsüblichen dentalen Kunststoffen, mit Polygläsern, Ceromeren oder Compositen verbinden oder sich mit einem darauf abgestimmten Verblendmaterial verbinden.

4. Verfahren nach einem der vorhergehenden Ansprüche,
dadurch gekennzeichnet,
daß bei der Herstellung von Brücken ein freitragendes Zwischenglied mit Fasermaterial (3, 4) verstärkt und stabilisiert wird.

5. Verfahren nach Anspruch 4,
dadurch gekennzeichnet,
daß der Verbindungssteg mit weiterem Fasermaterial (4) umkleidet oder umwickelt wird.

6. Verfahren nach einem der vorhergehenden Ansprüche,
dadurch gekennzeichnet,
daß die zahntechnische Restauration sowohl als temporär festsitzende Restauration als auch als definitiv festsitzende Restauration eingegliedert wird.

7. Verfahren nach einem der vorhergehenden Ansprüche,
dadurch gekennzeichnet,
daß Gerüste für Einzelkronen, Brücken beliebiger Spannweiten, Inlaybrücken, Maryland-Brücken, Außenteleskope oder Suprakonstruktionen für Implantate erstellt werden.

8. Verfahren nach einem der vorhergehenden Ansprüche,
dadurch gekennzeichnet,
daß das Fasermaterial (3, 4) zur Verstärkung von Prothesenteilen eingesetzt wird.

9. Verfahren nach einem der vorhergehenden Ansprüche,
dadurch gekennzeichnet,
daß als Fasermaterial (3, 4) Glasfasern, Carbonfasern, Polyethylenfasern oder sonstige Kunst- oder Naturfasern zum Einsatz kommen.

10. Verfahren nach Anspruch 9,
dadurch gekennzeichnet,
daß das Fasermaterial (3, 4) als Rohware oder als bereits mit einem zu polymerisierenden Kunststoff vorgetränkt zum Einsatz kommt.

11. Verfahren n ach Anspruch 10,
dadurch gekennzeichnet,
daß das Verbringen des Fasermaterials (3, 4) auf den Modellstumpf manuell oder durch ein maschinelles Verfahren erfolgt.

12. Verfahren nach Anspruch 11,
dadurch gekennzeichnet,
daß als maschinelles Verfahren ein Tiefziehverfahren verwendet wird.

13. Verfahren nach einem der vorhergehenden Ansprüche,
dadurch gekennzeichnet,
daß das Fasermaterial (3, 4) mit einem Kunststoff durchtränkt wird, der auf unterschiedliche Weise auspolymerisiert wird. So kommen Kunststoffe zum Einsatz, die kalt, heiß oder unter Lichteinwirkung auspolymerisieren.

14. Verfahren nach Anspruch 13,
dadurch gekennzeichnet,
daß Kunststoffe zum Einsatz kommen, die kalt, heiß oder unter Lichteinwirkung auspolymerisieren.

15. Mit Kunststoff, Polyglas, Ceromer oder Composit umkleidete Inlay, Onlay, Kronen, Brücken oder Prothesenteile, hergestellt nach einem Verfahren der Ansprüche 1 bis 14.
